(19) Europäisches Patentamt / European Patent Office / Office européen des brevets

(11) **EP 3 683 686 B1**

(12) **FASCICULE DE BREVET EUROPEEN**

(45) Date de publication et mention de la délivrance du brevet:
**24.02.2021 Bulletin 2021/08**

(51) Int Cl.:
*G06F 13/364* *(2006.01)*

(21) Numéro de dépôt: **20150562.5**

(22) Date de dépôt: **07.01.2020**

(54) **DISPOSITIF D'ARBITRAGE**

ARBITRIERUNGSVORRICHTUNG

ARBITRATION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.01.2019 FR 1900377**

(43) Date de publication de la demande:
**22.07.2020 Bulletin 2020/30**

(73) Titulaires:
• **STMICROELECTRONICS SA**
  **92120 Montrouge (FR)**
• **STMICROELECTRONICS (GRENOBLE 2) SAS**
  **38000 Grenoble (FR)**

(72) Inventeurs:
• **DENIS, Bruno**
  **38330 SAINT NAZAIRE LES EYMES (FR)**
• **TABA, Christophe**
  **38130 ECHIROLLES (FR)**

(74) Mandataire: **Cabinet Beaumont**
  **4, Place Robert Schuman**
  **B.P. 1529**
  **38025 Grenoble Cedex 1 (FR)**

(56) Documents cités:
KR-A- 20030 057 594     US-A- 5 832 278
US-A1- 2003 229 742     US-B1- 7 143 219

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

Domaine technique

La présente description concerne de façon générale les circuits électroniques, et plus particulièrement des dispositifs d'arbitrage prévus dans de tels circuits électroniques.

Technique antérieure

On connaît des dispositifs d'arbitrage permettant de sélectionner une requête parmi plusieurs requêtes reçues, dans lesquels les requêtes reçues ont chacune un niveau de priorité pouvant différer d'une requête à l'autre. Dans de tels dispositifs, la sélection de la requête est basée sur les niveaux de priorité des requêtes reçues

US7143219 B1 décrit un dispositif configuré pour recevoir des requêtes, le dispositif comprenant autant de premiers arbitres à priorité tournante qu'il y a de niveaux de priorité possibles pour les requêtes.

Résumé de l'invention

Il existe un besoin d'un dispositif qui pallie tout ou partie des inconvénients des dispositifs d'arbitrage connus.

Plus particulièrement, il existe un besoin d'un dispositif d'arbitrage permettant de réduire, voire supprimer, le risque de famine, c'est-à-dire une situation où une requête ne serait jamais sélectionnée.

Il existe en outre un besoin d'un dispositif d'arbitrage permettant de sélectionner une requête non seulement sur la base des niveaux de priorité des requêtes reçues, mais également sur la base du type de la requête choisi parmi plusieurs types, de préférence parmi deux types représentatifs du fait que le traitement de la requête doit respectivement être ou non effectué en temps réel.

Ainsi, l'invention prévoit un dispositif configuré pour recevoir des requêtes, le dispositif comprenant : autant de premiers arbitres à priorité tournante qu'il y a de niveaux de priorité possibles pour les requêtes ; et un circuit configuré pour transmettre chaque requête reçue à un nombre de premiers arbitres déterminé en fonction du niveau de priorité de la requête.

Selon l'invention, le nombre de premiers arbitres auxquels le circuit transmet chaque requête augmente avec le niveau de priorité de la requête.

Selon un mode de réalisation, pour chaque requête, le niveau de priorité de la requête est représenté par un nombre entier compris entre 1 et un nombre de niveaux de priorité possibles pour les requêtes, ledit nombre entier étant d'autant plus élevé que la requête est prioritaire.

Selon un mode de réalisation, ledit circuit est configuré pour transmettre chaque requête à un nombre de premier arbitre égal au nombre entier représentatif du niveau de priorité de la requête.

Selon un mode de réalisation, ledit circuit est en outre configuré pour sélectionner de manière aléatoire, pour chaque requête, le ou les premiers arbitres auxquels le circuit transmet la requête.

Selon un mode de réalisation, chaque premier arbitre est associé à un niveau de priorité respectif parmi les niveaux de priorité possibles, le circuit étant en outre configuré pour transmettre, à chaque premier arbitre, chaque requête ayant un niveau de priorité supérieur ou égal au niveau de priorité associé au premier arbitre.

Selon un mode de réalisation, le dispositif comprend en outre un deuxième arbitre à priorité tournante dont des entrées sont respectivement connectées aux sorties des premiers arbitres.

Un autre mode de réalisation prévoit un système comprenant : un dispositif tel que défini ci-dessus ; un troisième arbitre à priorité tournante ; un quatrième arbitre à priorité fixe dont une première entrée est connectée à une sortie du deuxième arbitre dudit dispositif et dont une deuxième entrée est connectée à une sortie du troisième arbitre; et un circuit configuré pour recevoir des requêtes ayant chacune un type sélectionné parmi un premier type et un deuxième type, et pour transmettre les requêtes du premier type au circuit dudit dispositif et les requêtes du deuxième type audit troisième arbitre, le circuit du système comprenant par exemple le circuit dudit dispositif.

Selon un mode de réalisation, lorsqu'une requête est présente sur chacune des première et deuxième entrées du quatrième arbitre, le quatrième arbitre est configuré pour sélectionner la requête présente sur sa deuxième entrée.

Un autre mode de réalisation prévoit un système comprenant : des premier et deuxième dispositifs tels que définis ci-dessus ; un troisième arbitre à priorité fixe dont une première entrée est connectée à une sortie du deuxième arbitre dudit premier dispositif et dont une deuxième entrée est connectée à une sortie du deuxième arbitre dudit deuxième dispositif; et un circuit configuré pour recevoir des requêtes d'un type sélectionné parmi un premier type et un deuxième type, et pour transmettre les requêtes du premier type au circuit dudit premier dispositif et les requêtes du deuxième type au circuit dudit deuxième dispositif, le circuit du système comprenant par exemple le circuit du premier dispositif et/ou le circuit du deuxième dispositif.

Selon un mode de réalisation, lorsqu'une requête est présente sur chacune des première et deuxième entrées du troisième arbitre, le troisième arbitre est configuré pour sélectionner la requête présente sur sa deuxième entrée.

Selon un mode de réalisation, le nombre de niveaux de priorité possibles pour les requêtes du premier type est différent du nombre de niveaux de priorité possibles pour les requêtes du deuxième type.

Selon un mode de réalisation, les requêtes ne nécessitant pas un traitement en temps réel sont du premier type, les requêtes nécessitant un traitement en temps réel étant du deuxième type.

Un autre mode de réalisation prévoit un circuit électronique tel qu'un microcontrôleur, un microprocesseur ou un circuit d'accès direct en mémoire, comprenant un dispositif ou un système tels que définis ci-dessus.

L'invention prévoit un procédé comprenant les étapes successives suivantes : recevoir plusieurs requêtes ayant des niveaux de priorité différents ; et transmettre, par un circuit, les requêtes à des premiers arbitres à priorité tournante, le nombre total de premiers arbitres étant égal au nombre de niveaux de priorité possibles, le nombre de premiers arbitres auxquels est transmise chaque requête étant déterminé par le niveau de priorité de la requête et augmentant avec le niveau de priorité de la requête.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente de manière schématique et sous forme de blocs un mode de réalisation d'un dispositif d'arbitrage ;

la figure 2 représente de manière schématique et sous forme de blocs un mode de réalisation d'un système comprenant le dispositif de la figure 1 ; et

la figure 3 représente de manière schématique et sous forme de blocs un autre mode de réalisation d'un système comprenant le dispositif de la figure 1.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les différents signaux et protocoles définissant une requête n'ont pas été détaillés, les modes de réalisation décrits étant compatibles avec les signaux et les protocoles usuels de requête. En outre, les circuits électroniques dans lesquels un dispositif d'arbitrage est prévu n'ont pas été détaillés, les modes de réalisation décrits étant compatibles avec les circuits électroniques usuels comprenant un dispositif d'arbitrage. Enfin, le fonctionnement et les diverses mises en oeuvre d'arbitres de type à priorité tournante ("round robin") et d'arbitres de type à priorité fixe n'ont pas été décrits, les modes de réalisation décrits étant compatibles avec le fonctionnement usuel et les mises en oeuvre usuelles de ces arbitres.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

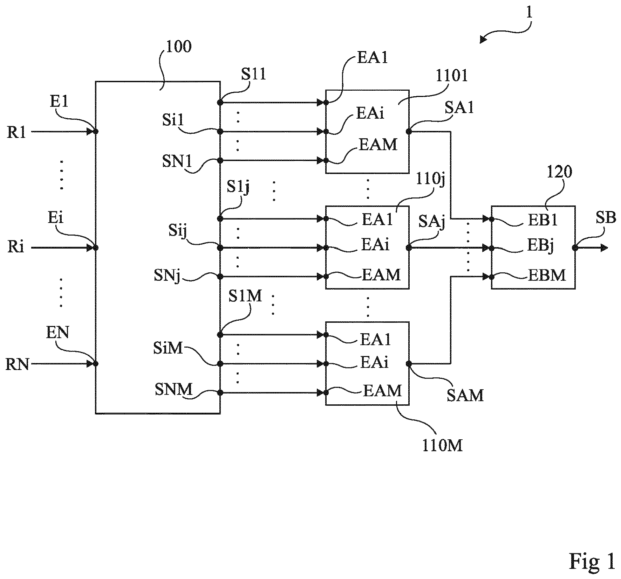

La figure 1 représente de façon schématique et sous forme de blocs un mode de réalisation d'un dispositif d'arbitrage 1.

Le dispositif 1 est ici prévu pour recevoir jusqu'à N requêtes Ri simultanément, avec i entier allant de 1 à N et N entier supérieur ou égal à 2. En outre, chaque requête Ri a un niveau de priorité p, avec p entier compris entre 1 et M entier supérieur ou égal à 2. Chaque requête Ri peut prendre n'importe quel niveau de priorité p compris entre 1 et M. On considère ici qu'une requête est d'autant plus prioritaire que son niveau de priorité est élevé. A titre d'exemple, le niveau de priorité p d'une requête Ri est fixé par un dispositif ou circuit ayant émis la requête.

Le dispositif 1 comprend un circuit 100. Le circuit 100 est configuré pour recevoir, le cas échéant, les N requêtes Ri simultanément. Le circuit 100 comprend ainsi N entrées Ei, avec i allant de 1 à N, chaque entrée Ei étant destinée à recevoir une requête Ri correspondante.

Le dispositif 1 comprend en outre M arbitres 110j, avec j entier allant de 1 à M. Autrement dit, le dispositif 1 comprend autant d'arbitres 110j que le nombre M de niveaux de priorité possibles pour les requêtes Ri. Chaque arbitre 110j est de type à priorité tournante. En outre, chaque arbitre 110j comprend N entrées EAi, avec i entier allant de 1 à N. Autrement dit, chaque arbitre 110j peut recevoir jusqu'à N requêtes simultanément. Chaque arbitre 110j comprend une sortie SAj au niveau de laquelle est disponible la requête sélectionnée par cet arbitre.

Le circuit 100 est configuré pour transmettre, ou distribuer, chaque requête Ri de niveau de priorité p qu'il reçoit à p arbitres parmi les M arbitres 110j. Plus particulièrement, pour chaque entrée Ei, le circuit 100 comprend M sorties Sij correspondantes, avec j entier allant de 1 à M. Pour une entrée Ei donnée, les M sorties Sij correspondantes sont reliées, de préférence connectées, aux entrées EAi des arbitres respectifs 110j. Autrement dit, chaque sortie Sij est reliée, de préférence connectée, à l'entrée EAi de l'arbitre 110j.

Dans cet exemple, on considère que, lorsqu'une requête Ri ayant un niveau de priorité p est reçue par le circuit 100, le circuit 100 transmet cette requête aux p arbitres 1101, 1102,..., 110j, 110p-1 et 110p. Autrement dit, chaque arbitre 110j est associé à un niveau de priorité p différent, dans cet exemple le niveau p égal à l'indice j de l'arbitre considéré, et le circuit 100 est configuré pour transmettre à l'arbitre 110j toutes les requêtes Ri ayant un niveau de priorité supérieur ou égal à j.

Le dispositif 1 comprend en outre un arbitre 120. L'arbitre 120 est de type à priorité tournante. L'arbitre 120 comprend autant d'entrées EBj qu'il y a d'arbitres 110j, ou, autrement dit, qu'il y a de niveaux de priorité possibles pour les requêtes Ri. Chaque entrée EBj, avec j entier allant de 1 à M, est reliée, de préférence connectée, à la sortie SAj de l'arbitre 110j. Ainsi, lorsqu'un arbitre 110j sélectionne l'une des requêtes disponibles sur ses entrées EAi, la requête sélectionnée est transmise à l'entrée EBj de l'arbitre 120, via la sortie SAj de l'arbitre 110j. L'arbitre 120 comprend une sortie SB au niveau de laquelle est disponible la requête sélectionnée par l'arbitre 120. La sortie SB constitue une sortie du dispositif 1.

Bien que cela ne soit pas représenté ici, chaque arbitre 110j, l'arbitre 120 et le circuit 100 ont de préférence chacun une entrée destinée à recevoir un signal de synchronisation, par exemple un signal périodique de synchronisation, ou signal d'horloge, clk. Dans ce cas, une requête sur une entrée du circuit 120 ou d'un des arbitres 110j et 120 est de préférence prise en compte lors de fronts, par exemple les fronts montants, du signal clk.

En outre, bien que l'on ait représenté chaque requête par un unique fil en figure 1, en pratique, la requête peut comprendre plusieurs signaux et donc être transmise via une pluralité de fils conducteurs. Par exemple, la requête peut comprendre un signal req sur un bit transmis sur un fil conducteur correspondant, un signal ack d'acquittement de la requête sur un bit transmis sur un fil conducteur correspondant, le signal ack permettant de valider la requête selon un protocole donné, par exemple un protocole quatre phases ou un protocole où une requête est validée quand les signaux ack et req sont actifs simultanément lors d'un front (montant et/ou descendant) d'un signal de synchronisation, et un signal de données sur plusieurs bits transmis sur plusieurs fils conducteurs correspondants, le signal de données comprenant notamment une information représentative du niveau de priorité de la requête. A titre d'exemple, lorsque la requête est une requête correspondant à un transfert de données, le signal de données de la requête comprend par exemple des informations représentatives de la source du transfert, de la destination du transfert, de la taille et/ou du nombre de mots de données à transférer, etc.

Le fonctionnement du dispositif 1 est le suivant. Lorsqu'une requête Ri est reçue par l'entrée Ei correspondante du circuit 100, le circuit 100 détermine le niveau de priorité p de cette requête, par exemple grâce à une information représentative de ce niveau p comprise dans la requête. Le circuit 100 transmet alors cette requête Ri à p arbitres 110j, par l'intermédiaire de p sorties Sij. Cela est mis en oeuvre pour chacune des N entrées Ei pouvant recevoir une requête Ri correspondante. Ainsi, chacun des M arbitres 110j est susceptible de recevoir une ou plusieurs requêtes du circuit 100. Chacun des M arbitres 110j ayant reçu une ou plusieurs requêtes du circuit 100 met en oeuvre un procédé d'arbitrage de type à priorité tournante et sélectionne l'une des requêtes présentes sur ses entrées EAi. Les requêtes sélectionnées par les M arbitres 110j sont disponibles au niveau des sorties respectives SAj de ces arbitres, et sont fournies à l'arbitre 120. L'arbitre 120 met alors en oeuvre un procédé d'arbitrage de type à priorité tournante et sélectionne l'une des requêtes présentes sur ses entrées EBi, la requête sélectionnée étant ensuite disponible sur la sortie SB de l'arbitre 120 et constituant la requête sélectionnée par le dispositif d'arbitrage 1.

Dans le dispositif 1, lorsque plusieurs requêtes Ri sont reçues simultanément par le circuit 100, plus le niveau de priorité p d'une requête est élevé, plus le nombre p d'arbitres 110j auxquels est transmise la requête est élevé. Il en résulte que la probabilité qu'une requête soit sélectionnée par un ou plusieurs arbitres 110j, puis par l'arbitre 120, augmente avec son niveau de priorité. Ainsi, plus le niveau de priorité p d'une requête est élevé, plus la probabilité que cette requête soit sélectionnée par le dispositif 1 augmente.

En outre, du fait que les arbitres 110j et 120 sont de type à priorité tournante et non pas de type à priorité fixe, lorsque plusieurs requêtes Ri sont reçues simultanément par le dispositif 1, la probabilité que, parmi toutes les requêtes Ri reçues, une requête Ri ayant le niveau de priorité le plus faible soit sélectionnée par le dispositif 1 n'est pas nulle.

Cela permet d'éviter le risque de famine pour les requêtes reçues ayant le plus faible niveau de priorité.

A titre d'exemple, on considère le cas où M égal 3 et où, parmi les requêtes Ri que le dispositif 1 reçoit à un instant donné, par exemple un front montant du signal clk, x requêtes ont un niveau de priorité p égal à 1, y requêtes ont un niveau de priorité p égal à 2, et z requêtes ont un niveau de priorité p égal à 3, avec la somme de x, y et z inférieure ou égale à N. Dans l'exemple de la figure 1, chacune des x requêtes de niveau de priorité p égal à 1 est transmise à l'arbitre 1101, chacune des y requêtes de niveau de priorité p égal à 2 étant transmise à chacun arbitres 1101 et 1102, et chacune des z requêtes de niveau priorité p égal à 3 étant transmise à chacun des arbitres 1101, 1102 et 1103. Le tableau ci-dessous donne, pour cet exemple particulier, les probabilités qu'une requête soit sélectionnée par le dispositif 1 en fonction du niveau de priorité de la requête, dans les cas suivants :

- cas 1 : toutes les requêtes reçues ont le même niveau de priorité p égal à 1 (x>0, y=0 et z=0) ;
- cas 2 : toutes les requêtes reçues ont le même niveau de priorité p égal à 2 (x=0, y>0 et z=0) ;
- cas 3 : toutes les requêtes reçues ont le même niveau de priorité p égal à 3 (x=0, y=0 et z>0) ;
- cas 4 : aucunes des requêtes reçues n'a le niveau de priorité p égal à 1 (x=0, y>0 et z>0) ;
- cas 5 : aucunes des requêtes reçues n'a le niveau de priorité p égal à 2 (x>0, y=0 et z>0) ;
- cas 6 : aucunes des requêtes reçues n'a le niveau de priorité p égal à 3 (x>0, y>0 et z=0) ; et
- cas 7 : des requêtes avec les trois niveaux de priorité sont reçues (x>0, y>0 et z>0). On notera que les probabilités indiquées ci-dessous ne tiennent pas compte des états des arbitres 110j, c'est-à-dire qu'elles ne tiennent pas compte des éventuelles dernières requêtes sélectionnées (servies) par chacun des arbitres 110j.

[Table 1]

|  |  | p égal à 1 | p égal à 2 | p égal à 3 |
|---|---|---|---|---|
|  | Cas 1 | $\dfrac{1}{x}$ | 0 | 0 |
|  | Cas 2 | 0 | $\dfrac{1}{y}$ | 0 |
|  | Cas 3 | 0 | 0 | $\dfrac{1}{z}$ |
|  | Cas 4 | 0 | $\dfrac{2}{3*(y+z)}$ | $\dfrac{1}{3*z}+\dfrac{2}{3*(y+z)}$ |
|  | Cas 5 | $\dfrac{1}{3*(x+z)}$ | 0 | $\dfrac{2}{3*z}+\dfrac{1}{3*(x+z)}$ |
|  | Cas 6 | $\dfrac{1}{2*(x+y)}$ | $\dfrac{1}{2*y}+\dfrac{1}{2*(x+z)}$ | 0 |
|  | Cas 7 | $\dfrac{1}{3*(x+y+z)}$ | $\dfrac{1}{3*(x+y+z)}+\dfrac{1}{3*(y+z)}$ | $\dfrac{1}{3*(x+y+z)}+\dfrac{1}{3*(y+z)}+\dfrac{1}{3*z}$ |

On constate dans le tableau ci-dessus que, lorsque plusieurs requêtes sont reçues simultanément et que ces requêtes ont des niveaux de priorité différents, les requêtes ayant le niveau de priorité le plus élevé ont une probabilité plus grande d'être sélectionnée par le dispositif 1 que les requêtes ayant un niveau de priorité plus faible. Bien que le tableau ait été obtenu dans le cas d'un exemple particulier, les résultats ci-dessus se généralisent à n'importe quel couple de valeur M et N.

On a décrit ci-dessus un mode de réalisation dans lequel, d'une part chaque arbitre 110j est associé à un niveau de priorité p donné, et, d'autre part, le circuit 100 est configuré pour transmettre à chaque arbitre 110j toutes les requêtes de niveau de priorité supérieur ou égal au niveau de priorité auquel est associé cet arbitre 110j.

En variante, le circuit 100 est configuré pour sélectionner de manière aléatoire les p arbitres 110j auxquels il transmet chaque requête de niveau de priorité p reçue. Cela permet, lorsqu'une première requête et une deuxième requête, avec un niveau de priorité plus élevé que la première requête, sont reçues simultanément par le dispositif 1, de réduire l'écart entre la probabilité que la première requête soit sélectionnée par le dispositif 1 et la probabilité que la deuxième requête soit sélectionnée par le dispositif 1. Cela réduit donc le risque de famine pour les requêtes de niveaux de priorité les plus faibles. Toutefois, la probabilité que la deuxième requête soit sélectionnée reste supérieure à la probabilité que la première requête soit sélectionnée.

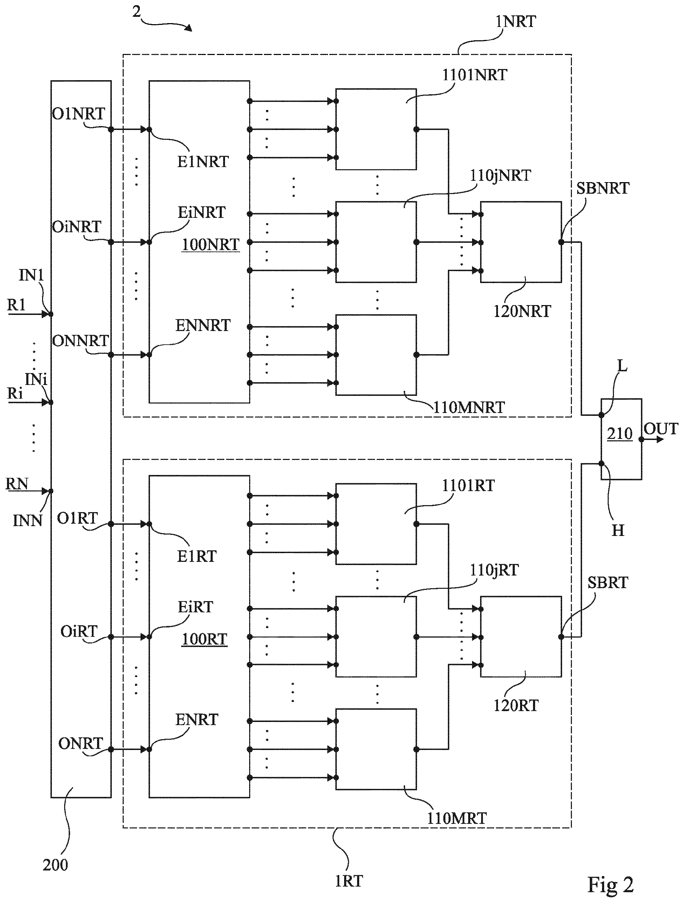

Dans certaines applications, il est souhaitable de prévoir deux types différents de requêtes, par exemple des requêtes d'un premier type correspondant à des requêtes qui ne nécessites pas un traitement en temps réel, et des requêtes d'un deuxième type correspondant à des requêtes nécessitant un traitement en temps réel, en prévoyant que les requêtes d'un des deux types, le deuxième type dans cet exemple, soient prioritaires sur les requêtes de l'autre des deux types, le premier type dans cet exemple. Un système, ou dispositif, d'arbitrage permettant de répondre à ce besoin va maintenant être décrit en relation avec la figure 2.

La figure 2 représente de manière schématique et sous forme de blocs un mode de réalisation d'un système 2 comprenant le dispositif 1, et plus particulièrement ici deux dispositifs 1.

Le système 2 peut recevoir jusqu'à N requêtes Ri simultanément. Chaque requête Ri reçue peut être d'un premier type, RT, ou d'un deuxième type, NRT, le premier type étant ici prioritaire sur le deuxième type. Par exemple, les requêtes de type NRT correspondent à des requêtes ne nécessitant pas de traitement en temps réel (NRT - "Non Real Time"), les requêtes de type RT correspondant à des requêtes nécessitant un traitement en temps réel (RT - "Real Time"). Le type RT ou NRT d'une requête est sélectionné, ou fixé, en amont du système 2, par exemple par un circuit ou dispositif ayant émis la requête. Le type RT ou NRT d'une requête est indiqué dans la requête, par exemple par une information représentative du type de la requête, cette information étant par exemple comprise dans le signal de données de la requête.

Chaque requête de type NRT a un niveau de priorité pNRT, avec pNRT entier compris entre 1 et un entier MNRT supérieur ou égal à 2. En outre, dans ce mode de réalisation, chaque requête de type RT a un niveau de priorité pRT, avec pRT entier compris entre 1 et un entier MRT supérieur ou égal à 2. Les entiers MNRT et MRT peuvent être différents ou égaux.

Un premier des deux dispositifs 1 est destiné à traiter les requêtes de type NRT et est référencé 1NRT en figure 2, le deuxième des deux dispositifs 1 étant destiné à traiter les requêtes de type RT et étant référencé 1RT en figure 2. En outre, en figure 2, les références utilisées pour désigner les divers éléments du dispositif 1NRT, respectivement 1RT, correspondent à celles utilisées pour désigner ces mêmes éléments en figure 1 auxquelles ont a ajouté le sigle NRT, respectivement RT.

Le système 2 comprend, en outre, un circuit 200. Le circuit 200 comprend N entrées INi, chacune destinée à recevoir une requête Ri correspondante. Les entrées INi du circuit 200 constituent des entrées du système 2. Pour chaque entrée INi, le circuit 200 comprend deux sorties OiNRT et OiRT reliées, de préférence connectées, aux entrées respectives EiNRT et EiRT des dispositifs 1NRT et 1RT. Lorsque le système 2 reçoit une requête Ri de type NRT, le circuit 200 est configuré pour la transmettre, via sa sortie OiNRT, à l'entrée correspondante EiNRT du circuit 100NRT du dispositif 1NRT. De manière similaire, lorsque le système 2 reçoit une requête Ri de type RT, le circuit 200 est configuré pour la transmettre, via sa sortie OiRT, à l'entrée correspondante EiRT du circuit 100RT du dispositif 1RT.

Le système 2 comprend également un arbitre 210. L'arbitre 210 comprend une entrée L reliée, de préférence connectée, à la sortie SBNRT du dispositif 1NRT, c'est-à-dire la sortie de l'arbitre 120NRT, et une entrée H reliée, de préférence connectée, à la sortie SBRT du dispositif 1RT, c'est-à-dire la sortie de l'arbitre 120RT. L'arbitre 210 comprend une sortie OUT constituant une sortie du système 2. L'arbitre 210 est de type à priorité fixe, c'est-à-dire que lorsque deux requêtes sont présentes simultanément sur ses entrées L et H, l'arbitre sélectionne toujours la requête présente sur son entrée la plus prioritaire. Dans cet exemple, l'arbitre sélectionne toujours la requête présente sur son entrée H, qui reçoit du dispositif 1RT les requêtes de type RT plus prioritaires que les requêtes de type NRT reçues, du dispositif 1NRT, par son entrée L.

En fonctionnement, lorsque le système 2 reçoit plusieurs requêtes Ri simultanément, les requêtes Ri de type NRT sont transmises par le circuit 200 au dispositif 1NRT où elles sont traitées en fonction de leurs niveaux de priorité pNRT de la façon décrite en relation avec la figure 1, les requêtes de type RT étant transmises par le circuit 200 au dispositif 1RT où elles sont traitées en fonction de leurs niveaux de priorité pRT de la façon décrite en relation avec la figure 1. Ainsi, lorsque le système 2 reçoit des requêtes de type RT et des requêtes de type NRT, le dispositif 1RT, respectivement 1NRT, sélectionne l'une de ces requêtes de type RT, respectivement NRT. L'arbitre 210 sélectionne alors la requête de type RT fournie par le dispositif 1RT, plutôt que la requête de type NRT fournie par le dispositif 1NRT.

Ainsi, dès lors que le système reçoit au moins une requête de type RT, le système sélectionne forcément une requête de type RT, nonobstant le fait que le système ait reçu des requêtes de type NRT en même temps que la ou les requêtes de type RT. Cela résulte du fait que le système 2 comprend une voie, ici le dispositif 1NRT, dédiée aux requêtes NRT, et une voie, ici le dispositif 1RT dédiée aux requêtes RT, et que l'arbitre 210 sélectionne en priorité la deuxième voie.

Bien que cela ne soit pas représenté ici, le circuit 200 et/ou l'arbitre 210 peuvent comprendre, comme les circuits 100RT, 100NRT et les arbitres 110jRT, 110jNRT, 120RT et 120NRT, une entrée destinée à recevoir un signal de synchronisation, par exemple le signal clk.

En outre, bien que l'on ait représenté ici les circuits 200, 100RT et 100NRT sous la forme de trois circuits distincts, le circuit 200 peut comprendre le circuit 100RT et/ou le circuit 100NRT. Dans le cas particulier où le circuit 200 comprend les deux circuits 100RT et 100NRT, les requêtes Ri reçues par le circuit 200 sont directement transmises, par le circuit 200, aux arbitres 100jNRT et 100jRT en fonction de leurs types RT ou NRT et de leurs niveaux de priorité pRT ou pNRT.

Du fait que l'arbitre 210 sélectionne toujours la requête de type RT lorsqu'une telle requête est présente sur son entrée H, le système 2 est adapté au cas où le type RT correspond à des requêtes nécessitant un traitement en temps réel, et où le type NRT correspond à des requêtes ne nécessitant pas un traitement en temps réel.

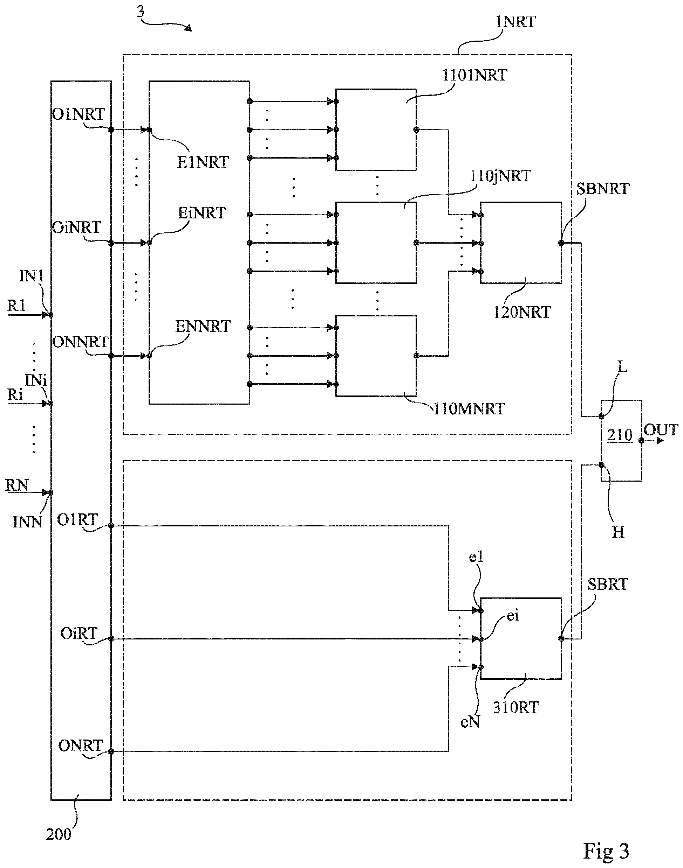

La figure 3 représente de manière schématique et sous forme de blocs un autre mode de réalisation d'un système 3 comprenant le dispositif 1 de la figure 1, et plus particulièrement ici un seul dispositif 1.

Le système 3 peut recevoir jusqu'à N requêtes Ri simultanément. Chaque requête Ri reçue peut être du type RT ou du type NRT. En outre, chaque requête de type NRT a un niveau de priorité pNRT, avec pNRT entier compris entre 1 et un entier MNRT supérieur ou égal à 2. En revanche, contrairement au cas du système 2, dans le système 3 les requêtes de type RT n'ont pas de niveau de priorité, ou, dit autrement, ont toutes un même et unique niveau de priorité pRT. Ainsi, aucune requête de type RT n'est plus prioritaires que les autres requêtes de type RT.

Le système 3 diffère alors du système 2 de la figure 2 en ce que le dispositif 1RT est remplacé par un arbitre 310RT de type à priorité tournante, l'arbitre 310RT correspondant alors à une voie dédiée au traitement des requêtes de type RT. Dans la suite, seules les différences entre les systèmes 2 et 3 sont détaillées.

L'arbitre 310RT comprend N entrées ei, avec i entier allant de 1 à N, de manière à pouvoir recevoir, le cas échéant, N requêtes simultanément. L'arbitre 310RT comprend une sortie SBRT au niveau de laquelle est disponible la requête sélectionnée par l'arbitre 310RT, parmi les requêtes présentes sur ses entrées ei.

Par ailleurs, l'entrée H de l'arbitre 210 est ici reliée, de préférence connectée, à la sortie SBRT de l'arbitre 310RT plutôt qu'à la sortie SBRT comme c'est le cas en figure 2. En outre, les N sorties OiRT du circuit 200 sont respectivement reliées, de préférence connectées, aux N entrées ei de l'arbitre 310RT plutôt qu'aux entrées EiRT du dispositif 1RT comme c'est le cas en figure 2.

Le fonctionnement du système 3 est similaire au fonctionnement du système 2.

Le système 3 permet de traiter deux types RT et NRT de requêtes, dans le cas où seules les requêtes de type NRT ont un niveau de priorité pouvant être différent entre deux requêtes de ce type.

Pour traiter ce cas, on aurait pu penser généraliser la description du dispositif 1 faite en relation avec la figure 1 au cas où le nombre M de niveaux de priorité possible est égal à un, et utiliser le dispositif 1 obtenu en lieu et place du dispositif 1RT du système de la figure 2. Toutefois, par rapport au système 3 décrit, cela aurait conduit à un système 2 comprenant un arbitre 110RT à priorité tournante supplémentaire et un circuit 100RT supplémentaire.

Dans les modes de réalisation décrits ci-dessus, on tire parti du fait qu'un arbitre à priorité tournante ne créé pas, à lui seul, de situation de famine. En outre, la prise en compte de niveaux de priorité différents entre des requêtes d'un même type est mise en oeuvre grâce aux circuits 100, 100RT et 100NRT, un arbitre à priorité tournante ne permettant pas de prendre en compte de tels niveaux de priorité. Autrement dit, on tire parti de la synergie entre les circuits 100, 100RT et 100NRT qui dupliquent les requêtes qu'ils reçoivent en fonction de leurs niveaux de priorité, et les arbitres à priorité tournante qui traitent les requêtes qu'ils reçoivent de manière équitable. Cela permet de réduire, voire d'éviter, le risque de famine dans les dispositifs et les systèmes d'arbitrages décrits.

Dans les modes de réalisation décrits ci-dessus en relation avec les figures 2 et 3, on a considéré que le type et le niveau de priorité d'une requête sont représentés par deux informations distinctes. Toutefois, on peut prévoir qu'une seule information soit représentative du niveau de priorité et du type d'une requête. Par exemple, on peut prévoir que les requêtes aient chacune un niveau de priorité k, avec k allant de 1 à MNRT+MRT, de sorte qu'une requête de niveau de priorité k compris entre 1 et MNRT corresponde, dans les modes de réalisation décrits, à une requête de type NRT et de niveau de priorité pNRT=k, et qu'une requête de niveau de priorité k compris entre MNRT+1 et MNRT+MRT corresponde, dans les modes de réalisation décrits, à une requête de type RT et de niveau de priorité pRT=k-MNRT. L'homme du métier est en mesure, à partir des indications fonctionnelles données dans la présente description, d'adapter les modes de réalisation décrits au cas ci-dessus, et plus généralement aux diverses façons possibles de représenter le type et/ou le niveau de priorité d'une requête.

Par ailleurs, bien que l'on ait décrit en relation avec les figures 2 et 3 deux types RT et NRT de requêtes indiquant si une requête doit respectivement faire ou non l'objet d'un traitement en temps réel, ces deux types de requêtes peuvent représenter d'autres informations. Par exemple, le type RT ou NRT d'une requête peut indiquer que la requête est une requête respectivement en écriture ou en lecture, les requêtes en lecture étant par exemple prioritaires sur les requêtes en écriture.

Les modes de réalisation et variantes décrits ci-dessus peuvent être prévus dans divers circuits électroniques tels que des microcontrôleurs, des microprocesseurs et des circuits d'accès direct en mémoire (DMA - "Direct Memory Access"). Par exemple, on peut prévoir un système 2 ou 3 dans un circuit DMA pour mettre en oeuvre un arbitrage entre les requêtes, par exemple des requêtes d'accès à un bus, issues des différents canaux du circuit DMA. Selon un exemple particulier de mise en oeuvre, on prévoit un système 3 recevant les requêtes d'un circuit DMA dans le cas où MNRT est égal à 3, N étant par exemple égal à 4.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art. En particulier, la variante de réalisation décrite en relation avec la figure 1 (choix aléatoire des p arbitres) s'applique au dispositif 100NRT décrit en relation avec les figures 2 et 3, ainsi qu'au dispositif 100RT décrit en relation avec la figure 2.

Enfin, la mise en oeuvre pratique des modes de réalisation et variantes décrits est à la portée de l'homme du métier à partir des indications fonctionnelles données ci-dessus. En particulier, bien que l'on ait décrits des systèmes 2 et 3 configurés pour prendre en compte deux types différents NRT et RT de requêtes, l'homme du métier est en mesure d'adapter les systèmes 2 et 3 pour qu'ils prennent en compte plus de deux types différents de requêtes. Par exemple, pour chaque type supplémentaire de requêtes, un dispositif 1 ou un arbitre à priorité tournante est ajouté au système selon que les requêtes de ce type supplémentaire peuvent ou non avoir plusieurs niveaux de priorité, le nombre d'entrées de l'arbitre 210 à priorité fixe, le nombre de sorties du circuit 200 et le fonctionnement du circuit 200 étant adaptés en conséquence.

**Revendications**

1. Dispositif (1, 1NRT, 1RT) configuré pour recevoir des requêtes (Ri), le dispositif comprenant :

   autant de premiers arbitres (110j, 110jNRT, 110jRT) à priorité tournante qu'il y a de niveaux de priorité possibles pour les requêtes ; **caractérisé par**
   un circuit (100, 100NRT, 100RT) configuré pour transmettre chaque requête reçue à un nombre de premiers arbitres déterminé en fonction du niveau de priorité de la requête, dans lequel le nombre de premiers arbitres auxquels le circuit (100, 100NRT, 100RT) transmet chaque requête (Ri) augmente avec le niveau de priorité de la requête.

2. Dispositif selon la revendication 1, dans lequel, pour chaque requête, le niveau de priorité de la requête est représenté par un nombre entier compris entre 1 et un nombre (M, MNRT, MRT) de niveaux de priorité possibles pour les requêtes, ledit nombre entier étant d'autant plus élevé que la requête est prioritaire.

3. Dispositif selon la revendication 2, dans lequel ledit circuit (100, 100NRT, 100RT) est configuré pour transmettre chaque requête (Ri) à un nombre de premier arbitre (110j, 110jNRT, 110jRT) égal au nombre entier représentatif du niveau de priorité de la requête.

4. Dispositif selon l'une quelconque des revendications 1 à 3, dans lequel ledit circuit (100, 100NRT, 100RT) est en outre configuré pour sélectionner de manière aléatoire, pour chaque requête (Ri), le ou les premiers arbitres (110j, 110jNRT, 110jRT) auxquels le circuit transmet la requête.

5. Dispositif selon l'une quelconque des revendications 1 à 4, dans lequel chaque premier arbitre (100j, 100jNRT, 100jRT) est associé à un niveau de priorité respectif parmi les niveaux de priorité possibles, le circuit (100, 100NRT, 100RT) étant en outre configuré pour transmettre, à chaque premier arbitre (110j, 110jNRT, 110jRT), chaque requête (Ri) ayant un niveau de priorité supérieur ou égal au niveau de priorité associé au premier arbitre.

6. Dispositif selon l'une quelconque des revendications 1 à 5, comprenant en outre un deuxième arbitre (120, 120NRT, 120RT) à priorité tournante dont des entrées (EBj) sont respectivement connectées aux sorties (SAj) des premiers arbitres (110j, 110jNRT, 110jRT).

7. Système (3) comprenant :

   un dispositif (1NRT) selon la revendication 6 ;
   un troisième arbitre (310RT) à priorité tournante ;

un quatrième arbitre (210) à priorité fixe dont une première entrée (L) est connectée à une sortie (SBNRT) du deuxième arbitre (120NRT) dudit dispositif et dont une deuxième entrée (H) est connectée à une sortie (SRT) du troisième arbitre (310RT) ; et

un circuit (200) configuré pour recevoir des requêtes (Ri) ayant chacune un type sélectionné parmi un premier type (NRT) et un deuxième type (RT), et pour transmettre les requêtes du premier type au circuit (100NRT) dudit dispositif (1NRT) et les requêtes du deuxième type audit troisième arbitre (310RT), le circuit (200) du système (3) comprenant par exemple le circuit (100NRT) dudit dispositif (1NRT).

8. Système selon la revendication 7 dans lequel, lorsqu'une requête est présente sur chacune des première (L) et deuxième (H) entrées du quatrième arbitre (210), le quatrième arbitre est configuré pour sélectionner la requête présente sur sa deuxième entrée (H).

9. Système (2) comprenant :

des premier (1NRT) et deuxième (1RT) dispositifs selon la revendication 6 ;
un troisième arbitre (210) à priorité fixe dont une première entrée (L) est connectée à une sortie (SBNRT) du deuxième arbitre (120NRT) dudit premier dispositif (1NRT) et dont une deuxième entrée (H) est connectée à une sortie (SBRT) du deuxième arbitre (120RT) dudit deuxième dispositif (1RT) ; et
un circuit (200) configuré pour recevoir des requêtes (Ri) d'un type sélectionné parmi un premier type (NRT) et un deuxième type (RT), et pour transmettre les requêtes du premier type au circuit (100NRT) dudit premier dispositif (1NRT) et les requêtes du deuxième type (RT) au circuit (100RT) dudit deuxième dispositif (1RT), le circuit (200) du système (3) comprenant par exemple le circuit (100NRT) du premier dispositif (1NRT) et/ou le circuit (100RT) du deuxième dispositif (1RT).

10. Système selon la revendication 9, dans lequel, lorsqu'une requête est présente sur chacune des première (L) et deuxième (H) entrées du troisième arbitre (210), le troisième arbitre est configuré pour sélectionner la requête présente sur sa deuxième entrée (H).

11. Système selon la revendication 9 ou 10, dans lequel le nombre (MNRT) de niveaux de priorité possibles pour les requêtes du premier type (NRT) est différent du nombre (MRT) de niveaux de priorité possibles pour les requêtes du deuxième type (RT).

12. Système (2, 3) selon l'une quelconque des revendications 7 à 11, dans lequel les requêtes ne nécessitant pas un traitement en temps réel sont du premier type, les requêtes nécessitant un traitement en temps réel étant du deuxième type.

13. Circuit électronique tel qu'un microcontrôleur, un microprocesseur ou un circuit d'accès direct en mémoire, comprenant un dispositif (100, 100NRT, 100RT) selon l'une quelconque des revendications 1 à 6 ou un système (2, 3) selon l'une quelconque des revendications 7 à 12.

14. Procédé comprenant les étapes successives suivantes :

- recevoir plusieurs requêtes (Ri) ayant des niveaux de priorité différents ; et
- transmettre, par un circuit (200), les requêtes à des premiers arbitres (110j, 110jNRT, 110jRT) à priorité tournante, le nombre total de premiers arbitres étant égal au nombre (M, MNRT, MRT) de niveaux de priorité possibles, le nombre de premiers arbitres auxquels est transmise chaque requête (Ri) étant déterminé par le niveau de priorité de la requête et augmentant avec le niveau de priorité de la requête.

**Patentansprüche**

1. Vorrichtung (1, 1NRT, 1RT), die zum Empfangen von Anfragen (Ri) konfiguriert ist, wobei die Vorrichtung umfasst:

so viele erste Rundlaufverfahren-Arbiter (110j, 110jNRT, 110jRT), wie es mögliche Prioritätsstufen für die Anfragen gibt; **gekennzeichnet durch**
eine Schaltung (100, 100NRT, 100RT), die so konfiguriert ist, dass sie jede empfangene Anfrage an eine Anzahl der ersten Arbiter überträgt, die gemäß der Prioritätsstufe der Anfrage bestimmt wird, wobei die Anzahl der ersten Arbiter, an die die Schaltung (100, 100NRT, 100RT) jede Anfrage (Ri) überträgt, mit der Prioritätsstufe der Anfrage zunimmt.

2. Vorrichtung nach Anspruch 1, wobei für jede Anfrage die Prioritätsstufe der Anfrage durch eine ganze Zahl im Bereich von 1 bis zu einer Anzahl (M, MNRT, MRT) von möglichen Prioritätsstufen für die Anfragen dargestellt wird, wobei die ganze Zahl umso höher ist, je höher die Priorität der Anfrage ist.

3. Vorrichtung nach Anspruch 2, wobei die Schaltung (100, 100NRT, 100RT) so konfiguriert ist, dass sie jede Anfrage (Ri) an eine Anzahl von ersten Arbitern (110j, 110jNRT, 110jRT) überträgt, die gleich der Ganzzahl ist, die die Prioritätsstufe der Anfrage darstellt.

4. Vorrichtung nach einem der Ansprüche 1 bis 3, wobei die Schaltung (100, 100NRT, 100RT) ferner so konfiguriert ist, dass sie für jede Anfrage (Ri) zufällig den/die ersten Arbiter (110j, 110jNRT, 110jRT) auswählt, an den/die die Schaltung die Anfrage überträgt.

5. Vorrichtung nach einem der Ansprüche 1 bis 4, wobei jeder erste Arbiter (100j, 100jNRT, 100jRT) einer jeweiligen Prioritätsstufe unter den möglichen Prioritätsstufen zugeordnet ist, wobei die Schaltung (100, 100NRT, 100RT) ferner so konfiguriert ist, dass sie an jeden ersten Arbiter (100j, 100jNRT, 100jRT) jede Anfrage (Ri) mit einer Prioritätsstufe überträgt, die größer oder gleich der dem ersten Arbiter zugeordneten Prioritätsstufe ist.

6. Vorrichtung nach einem der Ansprüche 1 bis 5, ferner umfassend einen zweiten Rundlaufverfahren-Arbiter (120, 120NRT, 120RT), dessen Eingänge (EBj) jeweils mit den Ausgängen (SAj) der ersten Arbiter (110j, 110jNRT, 110jRT) verbunden sind.

7. System (3), umfassend:

eine Vorrichtung (1NRT) gemäß Anspruch 6;
einen dritten Rundlaufverfahren-Arbiter (310RT);
einen vierten Arbiter (210) mit fester Priorität, der einen ersten Eingang (L) hat, der mit einem Ausgang (SBNRT) des zweiten Arbiters (120NRT) der Vorrichtung verbunden ist, und einen zweiten Eingang (H) hat, der mit einem Ausgang (SRT) des dritten Arbiters (310RT) verbunden ist; und
eine Schaltung (200), die konfiguriert ist, um Anfragen (Ri) zu empfangen, die jeweils einen Typ aufweisen, der aus einem ersten Typ (NRT) und einem zweiten Typ (RT) ausgewählt ist, und um Anfragen des ersten Typs an die Schaltung (100NRT) der Vorrichtung (1NRT) und Anfragen des zweiten Typs an den dritten Arbiter (310RT) zu übertragen, wobei die Schaltung (200) des Systems (3) beispielsweise die Schaltung (100NRT) der Vorrichtung (1NRT)umfasst.

8. System nach Anspruch 7, wobei, wenn eine Anfrage an jedem der ersten (L) und zweiten (H) Eingänge des vierten Arbiters (210) vorhanden ist, der vierte Arbiter so konfiguriert ist, dass er die an seinem zweiten Eingang (H) vorhandene Anfrage auswählt.

9. System (2), das Folgendes umfasst:

eine erste (1NRT) und eine zweite (1 RT) Vorrichtung gemäß Anspruch 6;
einen dritten Arbiter (210) mit fester Priorität, der einen ersten Eingang (L) hat, der mit einem Ausgang (SBNRT) des zweiten Arbiters (120NRT) der ersten Vorrichtung (1NRT) verbunden ist, und einen zweiten Eingang (H) hat, der mit einem Ausgang (SBRT) des zweiten Arbiters (120RT) der zweiten Vorrichtung (1RT) verbunden ist; und
eine Schaltung (200), die so konfiguriert ist, dass sie Anfragen (Ri) eines Typs empfängt, der aus einem ersten Typ (NRT) und einem zweiten Typ (RT) ausgewählt ist, und dass sie Anfragen des ersten Typs an die Schaltung (100NRT) der ersten Vorrichtung (1NRT) und Anfragen des zweiten Typs (RT) an die Schaltung (100RT) der zweiten Vorrichtung (1RT) überträgt, wobei die Schaltung (200) des Systems (3) zum Beispiel die Schaltung (100NRT) der ersten Vorrichtung (1NRT) und/oder die Schaltung (100RT) der zweiten Vorrichtung (1RT) umfasst.

10. System nach Anspruch 9, wobei, wenn eine Anfrage an jedem der ersten (L) und zweiten (H) Eingänge des dritten Arbiters (210) vorhanden ist, der dritte Arbiter so konfiguriert ist, dass er die an seinem zweiten Eingang (H) vorhandene Anfrage auswählt.

**11.** System nach Anspruch 9 oder 10, wobei sich die Anzahl (MNRT) der möglichen Prioritätsstufen für Anfragen des ersten Typs (NRT) von der Anzahl (MRT) der möglichen Prioritätsstufen für Anfragen des zweiten Typs (RT) unterscheidet.

**12.** System (2, 3) nach einem der Ansprüche 7 bis 11, wobei Anfragen, die keine Echtzeitverarbeitung erfordern, vom ersten Typ sind und Anfragen, die eine Echtzeitverarbeitung erfordern, vom zweiten Typ sind.

**13.** Elektronische Schaltung, wie z.B. ein Mikrocontroller, ein Mikroprozessor oder eine Direktspeicherzugriffsschaltung, mit der Vorrichtung (100, 100NRT, 100RT) nach einem der Ansprüche 1 bis 6 oder dem System (2, 3) nach einem der Ansprüche 7 bis 12.

**14.** Verfahren, das die folgenden aufeinanderfolgenden Schritte umfasst:

- Empfangen einer Vielzahl von Anfragen (Ri) mit unterschiedlichen Prioritätsstufen; und
- Übertragen der Anfragen mittels einer Schaltung (200) an erste Rundlaufverfahren-Arbiter (110j, 110jNRT, 110jRT), wobei die Gesamtzahl der ersten Arbiter gleich der Anzahl (M, MNRT, MRT) der möglichen Prioritätsstufen ist, wobei die Anzahl der ersten Arbiter, an die jede Anfrage (Ri) übertragen wird, durch die Prioritätsstufe der Anfrage bestimmt wird und mit der Prioritätsstufe der Anfrage zunimmt.

**Claims**

**1.** A device (1, 1NRT, 1RT) configured to receive requests (Ri), the device comprising:

as many first round-robin arbiters (110j, 110jNRT, 110jRT) as there are possible priority levels for the requests;
**characterized by**
a circuit (100, 100NRT, 100RT) configured to transmit each received request to a number of first arbiters determined according to the priority level of the request, wherein the number of first arbiters to which the circuit (100, 100NRT, 100RT) transmits each request (Ri) increases with the priority level of the request.

**2.** The device of claim 1, wherein, for each request, the priority level of the request is represented by an integer in the range from 1 to a number (M, MNRT, MRT) of possible priority levels for the requests, said integer being all the higher as the priority of the request is high.

**3.** The device of claim 2, wherein said circuit (100, 100NRT, 100RT) is configured to transmit each request (Ri) to a number of first arbiters (110j, 110jNRT, 110jRT) equal to the integer representative of the priority level of the request.

**4.** The device of any of claims 1 to 3, wherein said circuit (100, 100NRT, 100RT) is further configured to randomly select, for each request (Ri), the first arbiter (s) (110j, 110jNRT, 110jRT) to which the circuit transmits the request.

**5.** The device of any of claims 1 to 4, wherein each first arbiter (100j, 100jNRT, 100jRT) is associated with a respective priority level among the possible priority levels, the circuit (100, 100NRT, 100RT) being further configured to transmit, to each first arbiter (100j, 100jNRT, 100jRT), each request (Ri) having a priority level greater than or equal to the priority level associated with the first arbiter.

**6.** The device of any of claims 1 to 5, further comprising a second round-robin arbiter (120, 120NRT, 120RT) having inputs (EBj) respectively connected to the outputs (SAj) of the first arbiters (110j, 110jNRT, 110jRT).

**7.** A system (3) comprising:

the device (1NRT)of claim 6;
a third round-robin arbiter (310RT);
a fourth fixed priority arbiter (210) having a first input (L) connected to an output (SBNRT) of the second arbiter (120NRT) of said device and having a second input (H) connected to an output (SRT) of the third arbiter (310RT); and
a circuit (200) configured to receive requests (Ri) each having a type selected among a first type (NRT) and a second type (RT), and to transmit requests of the first type to the circuit (100NRT) of said device (1NRT)and requests of the second type to said third arbiter (310RT), the circuit (200) of the system (3) for example comprising the circuit (100NRT) of said device (1NRT).

8. The system of claim 7, wherein, when a request is present on each of the first (L) and second (H) inputs of the fourth arbiter (210), the fourth arbiter is configured to select the request present on its second input (H).

9. A system (2) comprising:

first (1NRT)and second (1RT) devices of claim 6;
a third fixed priority arbiter (210) having a first input (L) connected to an output (SBNRT) of the second arbiter (120NRT) of said first device (1NRT)and having a second input (H) connected to an output (SBRT) of the second arbiter (120RT) of said second device (1RT); and
a circuit (200) configured to receive requests (Ri) of a type selected among a first type (NRT) and a second type (RT), and to transmit requests of the first type to the circuit (100NRT) of said first device (1NRT)and requests of the second type (RT) to the circuit (100RT) of said second device (1RT), the circuit (200) of the system (3) for example comprising the circuit (100NRT) of the first device (1NRT)and/or the circuit (100RT) of the second device (1RT).

10. The system of claim 9, wherein, when a request is present on each of the first (L) and second (H) inputs of the third arbiter (210), the third arbiter is configured to select the request present on its second input (H).

11. The system of claim 9 or 10, wherein the number (MNRT) of possible priority levels for requests of the first type (NRT) is different from the number (MRT) of possible priority levels for requests of the second type (RT).

12. The system (2, 3) of any of claims 7 to 11, wherein requests which do not require a real-time processing are of the first type, the requests requiring a real-time processing being of the second type.

13. An electronic circuit such as a microcontroller, a microprocessor, or a direct memory access circuit, comprising the device (100, 100NRT, 100RT) of any of claims 1 to 6 or the system (2, 3) of any of claims 7 to 12.

14. A method comprising the successive steps of:

- receiving a plurality of requests (Ri) having different priority levels; and
- transmitting, by means of a circuit (200), the requests to first round-robin arbiters (110j, 110jNRT, 110jRT), the total number of first arbiters being equal to the number (M, MNRT, MRT) of possible priority levels, the number of first arbiters to which each request (Ri) is transmitted being determined by the priority level of the request and increasing with the priority level of the request.

Fig 1

Fig 2

Fig 3

**EP 3 683 686 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 7143219 B1